# EUROPEAN PATENT APPLICATION

(11) **EP 1 734 349 A2**
(43) Date of publication of application: **20.12.2006**
(21) Application number: 06115370.6
(22) Date of filing: 13.06.2006
(51) Int. Cl.: G01G 19/415

(54) **Apparatus for weighing, packing and labeling items**

(30) Priority: 16.06.2005 JP 2005176069
(71) Applicant: ISHIDA CO., Ltd., Kyoto-shi, Kyoto 606-8392 (JP)
(72) Inventor: Sakata, Toshiyuki, Shiga 520-3026 (JP); Nahara, Hideki, Shiga 520-3026 (JP)
(74) Representative: Skone James, Robert Edmund

(57) **Abstract**

In a weighing/packing/pricing apparatus, after a product is transferred to a lifter, processes on the product are suspended until a user's instructions are received (step S16). On the other hand, a fixed weight value of the product is kept displayed on a display even after the product is unloaded from a weighing tray (step S14). Accordingly, the user can check the fixed weight value displayed on the display, to determine whether or not the product should continue to be processed, before essential processes are carried out on the product. If the fixed weight value of the product does not satisfy desired conditions, the user can give instructions for cancellation, to thereby cancel the processes on the product (step S20).

## Description

### Technical Field

The present invention relates to a weighing label-printer which generates a label on which an item reflecting a weight of an object is printed.

### Background Art

As one of weighing label-printers capable of generating a label on which an item reflecting a weight of an object is printed, an apparatus for weighing, packing, and pricing ("weighing/packing/pricing apparatus") which is employed in a packing house and the like is known. The weighing/packing/pricing apparatus includes a weighing part for weighing a product (food product) provided as an object for weighing, a packing part for packing the product with a film, and a label affixing part for printing a price and the like calculated based on a weight value of the product on a label and affixing the printed label to the product. With the foregoing parts being provided, the weighing/packing/pricing apparatus has functions of weighing, packing, and pricing a product.

In a typical weighing/packing/pricing apparatus, when a product is placed on a weighing tray of a weighing part, the product is weighed. After a weight value of the product is fixed, the product is unloaded from the weighing tray, transferred to a packing part, and then placed on a lifter of the packing part. Thereafter, when a next product which is to be subsequently processed is placed on the weighing tray, the product which precedes the next product and is being placed on the lifter is packed with a film and a label is affixed to the packed product (such technique is disclosed in Japanese Patent Application Laid-Open No. 9-124011, for example).

In the meantime, it is desired that a weight of a product which is processed in the weighing/packing/pricing apparatus falls within a predetermined range in order to be salable in stores. For this reason, it is desirable that a product, a weight of which significantly deviates from the predetermined range, is excluded from proper objects for processes, prior to packing or pricing.

Also, in most cases, the weighing/packing/pricing apparatus is employed in environments with a high moisture content, high humidity, an unstable floor, and the like, which are hostile to an electronic device. Because of such hostile environments, a possibility that malfunction may occur in the weighing/packing/pricing apparatus is increased as compared to other electronic devices.

In view of the foregoing matters, it is now being strongly demanded that a user, namely, an operator who deals with a product, be allowed to easily check a fixed value weight which is a weight value fixed for each product in the weighing/packing/pricing apparatus.

On the other hand, a displaying part which is included in the weighing/packing/pricing apparatus and displays a weight value is legally required to be capable of displaying a weight value provided by the weighing part in real time. Hence, at a point in time when a product is placed on the weighing tray, a weight value of the product is displayed. However, according to the conventional arts, after the weight value is fixed so that a fixed weight value is provided and the product is unloaded from the weighing tray, the fixed weight value is no longer displayed on the displaying part because the product is not placed on the weighing tray. As such, a time period during which the fixed weight value is displayed on the displaying part is so short that a user cannot check the fixed weight value in effect.

### Disclosure of the Invention

The present invention is directed to a weighing label-printer which generates a label on which an item reflecting a weight of an object is printed.

According to the present invention, the weighing label-printer includes: weighing means (42) for weighing an object (90) placed in a predetermined weighing position (41); display means (31) which includes first means (A1) for serially displaying temporary weight values of the object (90) which are obtained in the weighing means (42), and second means (A2) for displaying a fixed weight value determined based on the temporary weight values; unloading means (43) for unloading the object (90) from the weighing position (41); input means (32, C1) for receiving a user's instructions which are either continuation instructions or cancellation instructions; and processing means (5, 6) for carrying out a subsequent process on the object (90), wherein the display means (31) is operable to continuously display the fixed weight value until the user's instructions are received, and at least part of the subsequent process is not started before the user's instructions are received, and is enabled in response to the continuation instructions, but is not enabled in response to the cancellation instructions.

Thus, as the at least part of the subsequent process is not started until the user's instructions are received, the user can surely check whether or not the fixed weight value of the object satisfies desired conditions before the subsequent process is carried out on the object. If the fixed weight value of the object does not satisfy the desired conditions, the user can give the cancellation instructions, to thereby cancel processes on the object.

According to a first aspect of the present invention, the processing means (5, 6) includes label printing means (61) for printing an item determined in accordance with the fixed weight value on the label (L).

Thus, when the fixed weight value of the object does not satisfy desired conditions, it is possible to stop printing some information on a label for the object.

According to a second aspect of the present invention, the processing means (5, 6) includes affixing means (62) for affixing the label (L) to the object (90).

Thus, if the fixed weight value of the object does not satisfy desired conditions, it is possible to stop affixing a label to the object.

According to a third aspect of the present invention, the processing means (5, 6) includes packing means (5) for packing the object (90) with a packing material (f).

Thus, if the fixed weight value of the object does not satisfy desired conditions, it is possible to stop packing the object.

According to a fourth aspect of the present invention, the packing means includes a lifter (51) for lifting up the object (90) in a packing process carried out on the object (90), the packing process is deferred with the object (90) being placed on the lifter (51) until the user's instructions are received, and the display means (31) is adapted to start to display the fixed weight value before the object (90) reaches the lifter (51).

Thus, as the fixed weight value of the object starts to be displayed before the object reaches the lifter, the user can check the fixed weight value before a waiting time starts, resulting in reduction of the waiting time.

According to a fifth aspect of the present invention, a waiting position (51) is located on a downstream side of the weighing position, and the display means (31) is adapted to start to display the fixed weight value before the object (90) reaches the waiting position (51).

Thus, as the fixed weight value of the object starts to be displayed before the object reaches the waiting position, the user can check the fixed weight value before a waiting time starts, resulting in reduction of the waiting time.

According to a sixth aspect of the present invention, the display means (31) is operable to display a guidance when the cancellation instructions are received, and the guidance includes a message (T2) explaining a user operation for processing a next object.

Thus, even if processes on the object are cancelled, the user can smoothly start a process on a next object based on the message (T2).

According to a seventh aspect of the present invention, the guidance further includes a confirmation message of the cancellation instructions.

Thus, if the user gives the cancellation instructions by mistake, the cancellation instructions can be withdrawn.

According to an eighth aspect of the present invention, the input means (32, C1) is operable to display the fixed weight value again to wait for a new user's instructions when the cancellation instructions are withdrawn in response to the confirmation message.

Thus, if the user gives the cancellation instructions by mistake, the user can check the fixed weight value again.

According to a ninth aspect of the present invention, the weighing label-printer further includes: detecting means (55, 56, 63) enabled in response to the cancellation instructions, to detect an obstacle to a process on a next object; and warning means (D2) for outputting warning (T3) when the obstacle is detected.

Thus, as a warning is output when any obstacle is present, it is possible to prevent occurrence of an obstacle to a process on a next object in a case where processes on the object are cancelled.

The present invention is also directed to a method of generating a label on which an item reflecting the weight of an object is printed.

Therefore, it is an object of the present invention to provide a weighing label-printer which makes it possible to surely check whether or not a fixed weight value of an object satisfies desired conditions before a subsequent process is carried out on the object.

These and other objects, features, aspects and advantages of the present invention will become more apparent from the following detailed description of the present invention when taken in conjunction with the accompanying drawings.

### Brief Description of the Drawings

Fig. 1 is a perspective view illustrating an appearance of a weighing/packing/pricing apparatus.
Fig. 2 is a diagrammatic view illustrating respective structures of components forming a main body of the weighing/packing/pricing apparatus according to a first preferred embodiment.
Fig. 3 is a block diagram illustrating electrical components of the weighing/packing/pricing apparatus, using functional blocks.
Fig. 4 illustrates an example of an image displayed on a display.
Fig. 5 is a flow chart illustrating a flow of operations of the weighing/packing/pricing apparatus.
Fig. 6 is a flow chart illustrating in detail a flow of operations performed in a canceling process according to the first preferred embodiment.
Fig. 7 illustrates an example of a confirmation dialog box according to the first preferred embodiment.
Fig. 8 illustrates an example of a warning dialog box according to the first preferred embodiment.
Fig. 9 is a diagrammatic view illustrating respective structures of components forming a main body of a weighing/packing/pricing apparatus according to a second preferred embodiment.
Fig. 10 is a flow chart illustrating a flow of operations performed in a canceling process according to the second preferred embodiment.
Fig. 11 illustrates an example of a confirmation dialog box according to the second preferred embodiment.

### Detailed Description of the Invention

Below, a weighing/packing/pricing apparatus which is employed in a packing house or the like will be described in detail, as one example of a weighing label-printer according to preferred embodiments of the present invention.

### <1. First Preferred Embodiment>

### <1-1. Overall Structure>

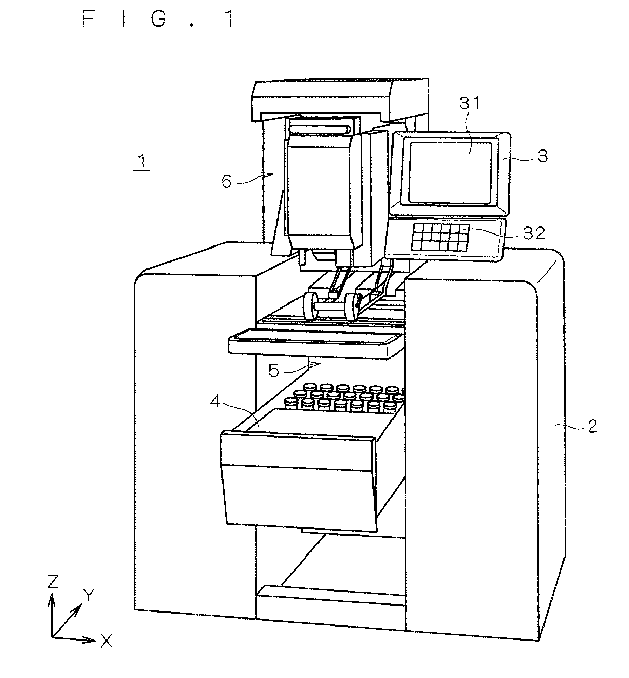

Fig. 1 is a perspective view illustrating an appearance of a weighing/packing/pricing apparatus 1. The weighing/packing/pricing apparatus 1 has functions of weighing a product, packing the product with a film, and affixing a label on which an item reflecting a weight of the product is printed to the product. A typical example of a product which is an object processed in the weighing/packing/pricing apparatus 1 is a food product sold in a store such as a supermarket. It is noted that the term "product" does not exclusively mean a food product itself, but covers a packaged food product placed on a tray or the like, in the present invention. Thus, the term "product" is used in a generic sense to include both a food product itself and a packaged food product placed on a tray or the like in the present specification. As illustrated in Fig. 1, the weighing/packing/pricing apparatus 1 is broadly sectionalized into a main body 2 for processing a product and a console 3 serving as a user interface.

It is noted that a three-dimensional XYZ rectangular coordinate system shown in the drawings will be employed to indicate directions or orientations in the following description, as needed. An X-axis, a Y-axis, and a Z-axis of the coordinate system are fixed relative to the main body 2. The X-axis and the Y-axis extend on a horizontal plane relative to the main body 2 and the Z-axis extends in a vertical direction relative to the main body 2 ("+Z side" corresponds to an upper side). Further, the X-axis extends in a lateral direction relative to the main body 2 and the Y-axis extends in a depth direction relative to the main body 2, for the purposes of explanation. More specifically, "+X side'' and "-X side" correspond to a right-hand side and a left-hand side of a viewer who faces the front of the main body 2, respectively, and "-Y side" and "+Y side" correspond to a front side and a back side, respectively.

The console 3 includes a display 31 for displaying a variety of information including a weight value of a product, and input buttons 32 for accepting various kinds of operations performed by a user ("user operation"). The display 31 can function as a touch panel. A user is allowed to input necessary information or instructions to the weighing/packing/pricing apparatus 1 via the input buttons 32 or a screen of the display 31 functioning as a touch panel, while referring to information displayed on the display 31.

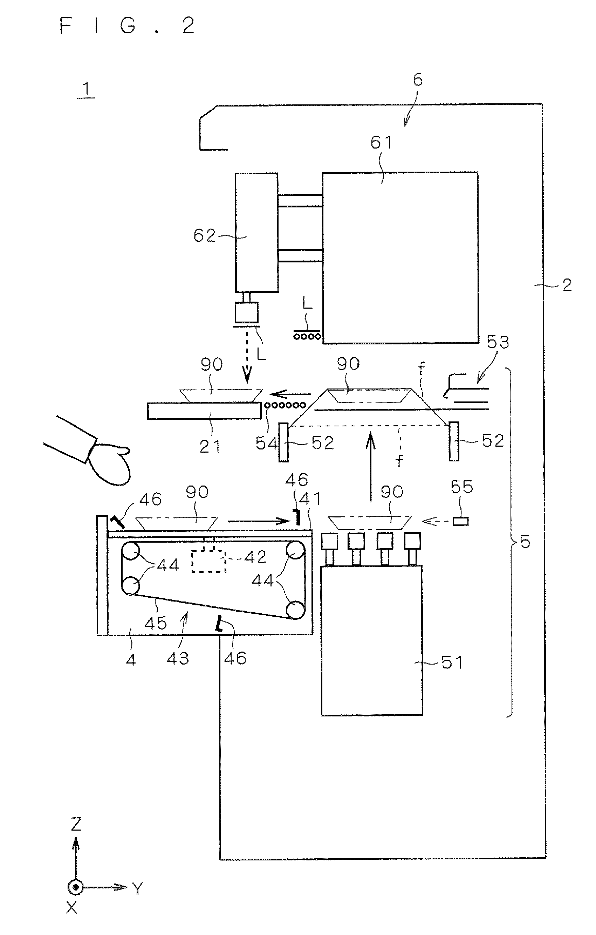

The main body 2 includes a weighing part 4 for weighing a product, a packing part 5 for packing a product with a film, and a label affixing part 6 for affixing a label to a product. Fig. 2 is a diagrammatic view of respective structures of the foregoing components forming the main body 2. Fig. 2 is an end view of the main body 2 when viewed from the right-hand side (+X side).

As illustrated in Figs. 1 and 2, the weighing part 4 is provided in a central region of the front side (-Y side) of the main body 2, with a portion thereof protruding in a direction of the front side (-Y side) of the main body 2. The packing part 5 is provided within the main body 2 to be located on a back side (+Y side) of the weighing part 4. The label affixing part 6 is provided above the weighing part 4 and the packing part 5.

The weighing part 4 includes a weighing tray 41 serving as a weighing position where a product 90 prepared as an object subjected to weighing is placed and weighed, a weighing sensor 42 connected to the weighing tray 41, and a transfer mechanism 43 for unloading the product 90 from the weighing tray 41. The weighing tray 41 is substantially flat and provided in a substantially horizontal position above the weighing part 4.

The weighing sensor 42 includes a load cell or the like, and outputs a weight value using a voltage signal. A weight value output from the weighing sensor 42 is proportional to a load provided by the weighing tray 41. The load provided by the weighing tray 41 varies temporally under the influence of placement of a product on the weighing tray 41, movement of a product on the weighing tray 41, or the like. For this reason, also a weight value output from the weighing sensor 42 varies temporally almost all the time.

Due to such temporal variation of a weight value, a weight of a product is not obtained until a weight value is stabilized. A weight value is determined to be stabilized when a range of variation of the weight value is reduced to be smaller than a predetermined range. Then, when the weight value is stabilized, the corresponding weight value is employed as a "fixed weight value" which indicates a weight of a product placed on the weighing tray 41.

The transfer mechanism 43 includes a plurality of driving rollers 44, an endless belt 45, and three pushing boards 46. The endless belt 45 is laid across the plurality of driving rollers 44. When the plurality of driving rollers 44 are driven, the endless belt 45 circulates along a predetermined path defined by the driving rollers 44. The three pushing boards 46 each of which extends along the X-axis are secured to the endless belt 45. Accordingly, circulation of the endless belt 45 causes the pushing boards 46 to circulate along the substantially same path as the path along which the endless belt 45 circulates.

During circulation of the pushing boards 46, the pushing boards 46 move substantially horizontally from the front side to the back side (+Y side) of the main body 2 above the weighing tray 41. Then, when any of the pushing boards 46 comes into contact with the product 90 placed on the weighing tray 41, the product 90 is pushed by the pushing board 46 to move toward the back side (+Y side). As a result, the product 90 is unloaded from the weighing tray 41 and transferred to the packing part 5.

The packing part 5 includes a lifter 51 for lifting up the product 90, a stretch mechanism 52 for stretching out a film f, and a fold mechanism 53 for folding the film f, and a welding conveyor 54 for welding the film f.

After the product 90 is unloaded from the weighing tray 41, the product 90 continues to move until the product 90 is placed on the lifter 51. The lifter 51 lifts up the product 90 placed thereon toward the stretch mechanism 52 provided above the lifter 51. Before the lifter 51 lifts up the product 90, the stretch mechanism 52 stretches out the film f supplied from a preset film supply on a substantially horizontal plane so that the film f is located just above the lifter 51 without looseness.

Then, when the product 90 is lifted up toward a lower surface of the film f stretched out as described above, the film f adheres to and covers an upper portion of the product 90. With the upper portion of the product 90 being covered by the film f, the fold mechanism 53 folds the film f so that the entirety of the product 90 is covered by the film f with a peripheral portion of the film f being turned to adhere to a lower portion of the product 90. At the same time, the fold mechanism 53 pushes out the product 90 toward the front side (-Y side).

As a result, the product 90 is transferred to a discharge stand 21 provided on the front side (-Y side) of the main body 2. During the transfer of the product 90 to the discharge stand 21, the product 90 passes above the welding conveyor 54. As such, the peripheral portion of the film f which is turned to adhere to the lower portion of the product 90 is heated to be welded by the welding conveyor 54. Consequently, the entirety of the product 90 is packed with the film f when the product 90 reaches the discharge stand 21.

The packing part 5 further includes a product sensor 55 for detecting presence or absence of a product. The product sensor 55 is provided to face a space on the lifter 51 where the product 90 is supposed to be transferred from the weighing part 4. The product sensor 55 then detects presence or absence of a product on the lifter 51 before the lifter 51 operates for lifting up a product. The product sensor 55 includes a reflection-type light sensor, which casts light and detects presence or absence of a product depending on whether or not reflected light is supplied from a product.

The label affixing part 6 includes a label printer 61 for printing some information on a label L and an affixing arm 62 for affixing the printed label L to a product.

The label printer 61 prints a name, a processed date, a price, a weight, and the like of a product on the label L using a print head. A price of a product is determined based on a weight of the product which is obtained as a fixed weight value in the weighing part 4 and a unit price (a price per given weight) of the product. The printed label L is issued from a front side (-Y side) of the label printer 61.

The affixing arm 62 includes an arm which is arbitrarily movable upward, downward, leftward, and rightward (in other words, along the Z-axis and the Y-axis). The affixing arm 62 is capable of holding the label L at a lower end thereof using vacuum suction. The affixing arm 62 receives the label L issued from the label printer 61 and affixes the label L to a predetermined position of the product 90 transferred to the discharge stand 21.

### <1-2. Electrical Components>

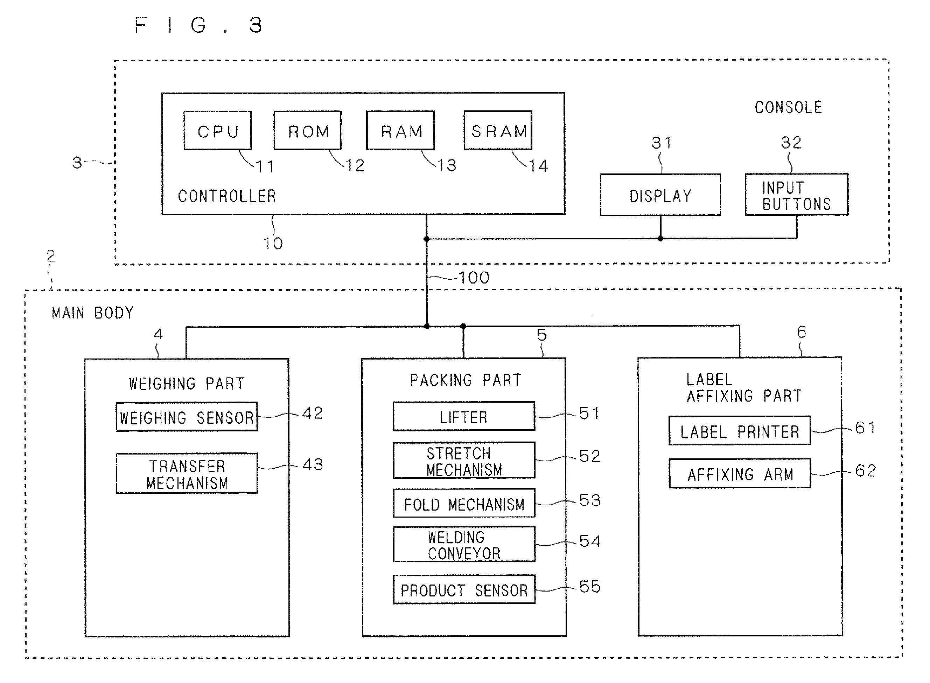

The console 3 includes a computer serving as a controller 10 for totally controlling the plural parts of the weighing/packing/pricing apparatus 1. Fig. 3 is a block diagram illustrating electrical components of the weighing/packing/pricing apparatus 1 including the above-mentioned controller 10, using functional blocks.

The controller 10 includes a CPU 11 for executing various operations, a ROM 12 for storing a program and the like, a RAM 13 which provides a work area for various operations, a battery-backed SRAM 14 serving as a non-volatile memory which stores plural pieces of data, and the like. To fulfill various functions of the controller 10, the CPU 11 executes operations in accordance with a program previously stored as a firmware in the ROM 12.

The display 31 and the input buttons 32 of the console 3 are electrically connected to the controller 10 via a bus line 100. Accordingly, the display 31 and the input buttons 32 of the console 3 operate under control of the controller 10, and details of operations performed by a user with the display 31 or the input buttons 32 are input to the controller 10.

Further, the weighing part 4, the packing part 5, and the label affixing part 6 of the main body 2 are electrically connected to the controller 10 via the bus line 100 in the same manner as the display 31 and the input buttons 32 of the console 3. Accordingly, the above-described components of the weighing part 4 (the weighing sensor 42, the transfer mechanism 43), the above-described components of the packing part 5 (the lifter 51, the stretch mechanism 52, the fold mechanism 53, the welding conveyor 54, the product sensor 55), and the above-described components of the label affixing part 6 (the label printer 61, the affixing arm 62) operate under control of the controller 10, also.

### <1-3. Display of Weight Value>

While a product is being processed, a weight value obtained in the weighing part 4 is displayed on the display 31 of the console 3. Below, display of a weight value on the display 31 will be described in detail.

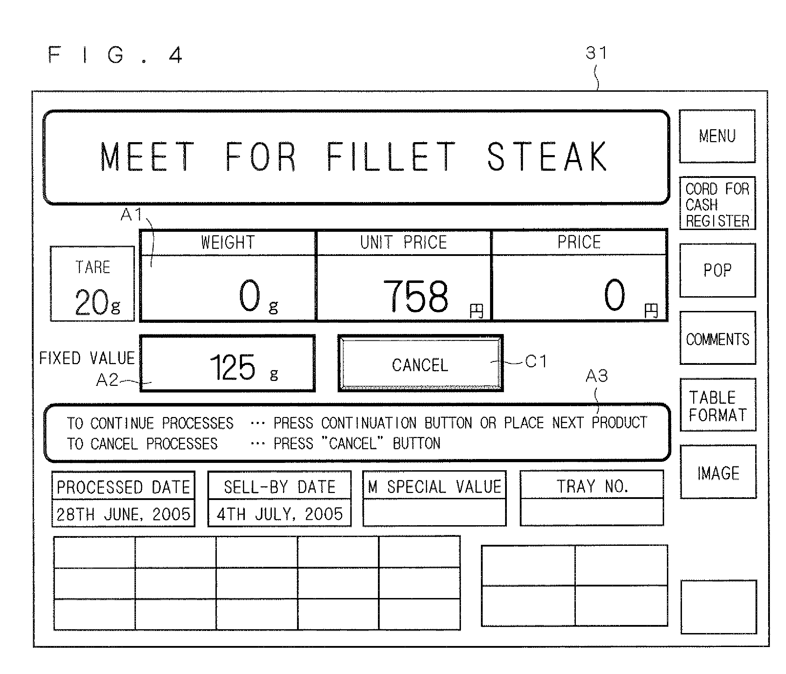

Fig. 4 illustrates an example of an image displayed on the display 31 while a product is being processed. As illustrated in Fig. 4, while one product is being processed, plural pieces of information including a name, a unit price, a price, and the like of the one product being processed are displayed in respective display areas on the display 31. The display areas include two display areas of a real-time-value display area A1 and a fixed-value display area A2 in order to show a user a weight value obtained in the weighing part 4.

The real-time-value display area A1 is a display area in which a weight value output from the weighing sensor 42 is displayed while reflecting temporal changes in real time. In other words, the real-time-value display area A1 displays a weight value, constantly following a change in weight value. Therefore, in the real-time-value display area A1, a weight value output from the weighing sensor 42 at a certain point in time is displayed as it is, and a displayed value changes almost all the time in accordance with a load on the weighing tray 41.

On the other hand, the fixed-value display area A2 is a display area in which a fixed weight value is displayed. In the fixed-value display area A2, unlike the real-time-value display area A1 in which a displayed value constantly changes, a displayed value is maintained until a next fixed weight value is obtained. Therefore, the last fixed weight value, namely, a weight of a product which has most recently been weighed in the weighing part 4, is displayed in the fixed-value display area A2.

Values displayed in the real-time-value display area A1 and the fixed-value display area A2 are controlled by the controller 10 based on a weight value output from the weighing sensor 42.

### <1-4. Operations>

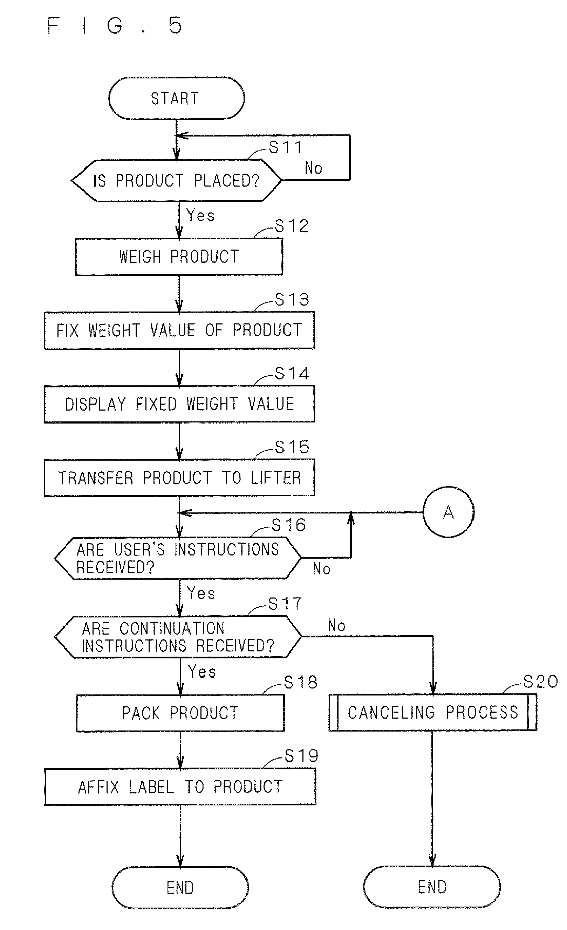

Next, a flow of operations of the weighing/packing/pricing apparatus 1 will be described. Fig. 5 is a flow chart illustrating a flow of operations of the weighing/packing/pricing apparatus 1. Though a plurality of products can be continuously processed in the weighing/packing/pricing apparatus 1, a given product is observed as one example and a flow for processing the given product is illustrated in the flow chart of Fig. 5. In the following description, the given product observed as one example will be referred to as an "observed product''.

In the weighing/packing/pricing apparatus 1, one product starts to be processed, taking a cue from placement of the one product on the weighing tray 41 by a user. More specifically, when an observed product is placed on the weighing tray 41, a weight value output from the weighing sensor 42 changes. The change in weight value output from the weighing sensor 42 causes the controller 10 to recognize the placement of the observed product on the weighing tray 41, so that the observed product starts to be processed (step S11).

First, the observed product is weighed by the weighing sensor 42 (step S12). At that time, a weight value of the observed product which is output from the weighing sensor 42 is displayed in real time in the real-time-value display area A1 of the display 31.

Then, when the weight value output from the weighing sensor 42 is stabilized, the weight value at the time of stabilization is established as a fixed weight value of the observed product by the controller 10 (step S 13). In response to the establishment of the fixed weight value, the fixed weight value of the observed product is displayed in the fixed-value display area A2 of the display 31 (step S14).

On the other hand, in response to the establishment of the fixed weight value, transfer of the observed product is started, also. More specifically, the transfer mechanism 43 of the weighing part 4 is driven, so that the observed product is unloaded from the weighing tray 41 to be placed on the lifter 51 (step S15). As just described, in response to the establishment of the fixed weight value, the fixed weight value is displayed, and at the same time, the observed product starts to be unloaded. Thus, the fixed weight value of the observed product starts to be displayed in the fixed-value display area A2 before the observed product reaches the lifter 51, and the same value is kept displayed in the fixed-value display area A2 of the display 31 after the observed product reaches the lifter 51. In contrast, a value displayed in the real-time-value display area A1 changes to "0" after the observed product is unloaded from the weighing tray 41.

When the observed product reaches the lifter 51, the processes carried out on the observed product are suspended for a while. The processes carried out on the observed product are suspended with the observed product being placed on the lifter 51 until any instructions are received from a user (step S16).

While the processes are being suspended, the user checks the fixed weight value of the observed product, to determine whether or not the observed product should continue to be processed based on the fixed weight value as checked. Then, the user gives instructions for either continuation or cancellation of the processes. In checking the fixed weight value, the user checks whether or not the fixed weight value of the observed product falls within a predetermined range which is previously estimated. In this regard, the user is allowed to surely check the fixed weight value because the fixed weight value of the observed product is kept displayed in the fixed-value display area A2 even after the observed product is unloaded from the weighing tray 41.

Then, if the fixed weight value as checked deviates from the predetermined range, the observed product is regarded as unsuitable for sale. Also, in a case where the fixed weight value as checked considerably deviates from the predetermined range, such considerable deviation may possibly be caused by occurrence of malfunction in the weighing/packing/pricing apparatus 1. In that situation, as the processes carried out on the observed product must be cancelled, the user gives instructions for canceling the processes (which will hereinafter be also referred to as "cancellation instructions"), to the weighing/packing/pricing apparatus 1.

In contrast thereto, in a case where the fixed weight value as checked falls within the predetermined range so that the observed product can continue to be processed without causing any problems, the user gives instructions for continuing the processes (which will hereinafter be also referred to as "continuation instructions"), to the weighing/packing/pricing apparatus 1. Such procedure for receiving the user's instructions can be translated into a procedure for asking for the user's intention and acknowledgement regarding the weighing results provided by the weighing part 4.

The user can give continuation instructions by pressing down a button which is included in the input buttons 32 and is allocated to continuation (continuation button). Alternatively, the user can give continuation instructions also by placing a product which is to be processed subsequent to the observed product (which product will be hereinafter referred to as a "next product") on the weighing tray 41. The placement of the next product on the weighing tray 41 serves as a cue for the processes on the observed product to be resumed, and also serves as a cue for processes on the next product to be started (the same steps as performed on the observed product after the step S12 are performed on the next product).

When continuation instructions are received ("Yes" in a step S17"), the controller 10 is correspondingly notified. Then, the processes on the observed product which have been suspended are resumed in response to receipt of the continuation instructions. In particular, first, a film is stretched out by the stretch mechanism 52. Thereafter, the observed product is lifted up toward the stretched film by the lifter 51, and subsequently packed with the film by the fold mechanism 53 and the welding conveyor 54. The observed product packed with the film is transferred to the discharge stand 21 (step S 18).

Also in response to receipt of the continuation instructions, label printing using the fixed weight value is started in the label printer 61. The printed label provided by the label printer 61 is received by the affixing arm 62. When the packed observed product is transferred to the discharge stand 21, the printed label is affixed to the packed observed product by the affixing arm 62 (step S 19). Then, a series of processes on the observed product are properly finished.

As described above, in the case where continuation instructions are received, a packing process and a label affixing process which have been deferred are carried out by the packing part 5 and the label affixing part 6, respectively. In contrast thereto, in the case where cancellation instructions are received, the foregoing processes which have been deferred are cancelled.

The user can give cancellation instructions by pressing down a "CANCEL" button C1 (refer to Fig. 4) displayed in the vicinity of the fixed-value display area A2 on the display 31. According to the first preferred embodiment, explanation about specific operating procedures respectively prepared for giving continuation instructions and cancellation instructions is displayed in a display area A3 located under the "CANCEL" button C1 as illustrated in Fig. 4, to allow the user to exactly give intended instructions. When cancellation instructions are received ("No" in the step S17 in Fig. 5), the deferred processes are not carried out, and instead, a canceling process necessary for canceling the deferred processes is carried out (step S20). Then, the processes which are to be carried out on the observed product are forcibly terminated.

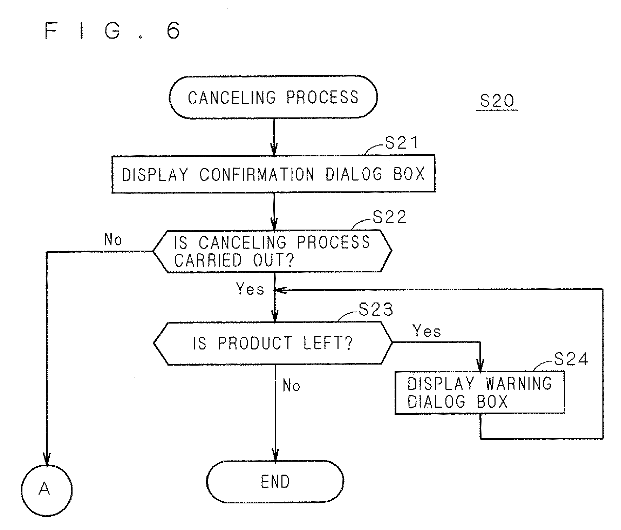

Now, the canceling process (step S20) will be described in detail. Fig. 6 is a flow chart illustrating in detail a flow of operations performed in the canceling process. In the canceling process, a confirmation dialog box showing the user cautions in canceling the processes on the observed product is displayed on the display 31, first (step S21).

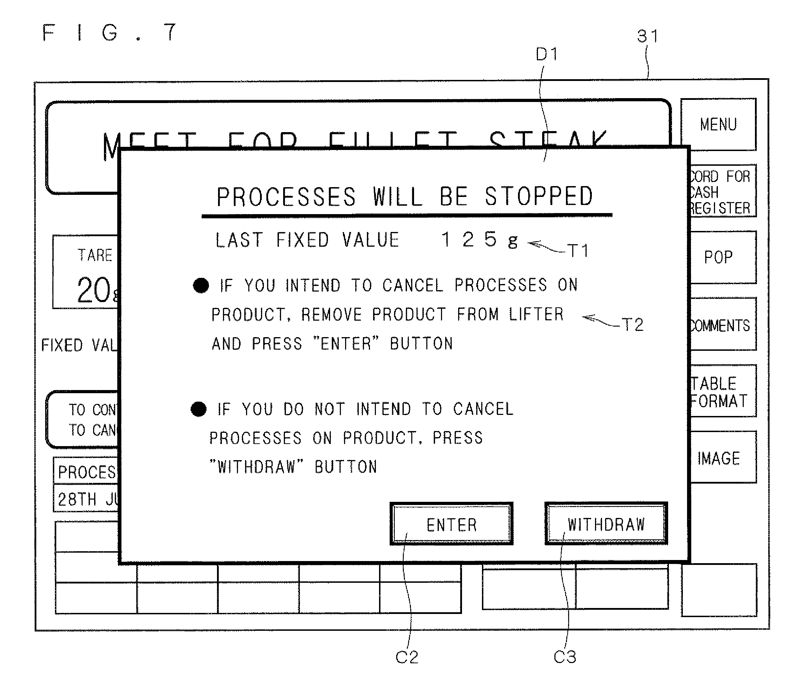

Fig. 7 illustrates an example of a confirmation dialog box D1. The confirmation dialog box D1 contains a character string T1 indicating the fixed weight value of the observed product in order for the user to reconfirm the fixed weight value. The confirmation dialog box D1 further contains a message for confirming cancellation instructions and a message T2 which explains operations which must be performed by the user in order to process the next product.

If the next product were to be processed without performing any operation on the observed product after the processes on the observed product are cancelled, the observed product would be left on the lifter 51, to stand as an obstacle to the processes on the next product. As such, the message T2 teaches the user to remove beforehand the observed product which is to stand as an obstacle. Such display of the message T2 allows the processes on the next product to be smoothly started.

Also, the confirmation dialog box D1 contains an "ENTER'' button C2 and a "WITHDRAW" button C3. Out of those buttons, when the "WITHDRAW" button C3 is pressed down, cancellation instructions are withdrawn ("No" in a step S22), so that the processes return to the step S16 in the flow chart of Fig. 5. Thus, even if the user gives cancellation instructions by mistake, provision of the "WITHDRAW" button C3 allows the observed product to continue to be processed with the cancellation instructions being withdrawn.

On the other hand, when the "ENTER" button C2 is pressed down, cancellation instructions are established ("Yes" in the step S22). In that case, whether or not the observed product is properly removed from the lifter 51 is subsequently checked.

More specifically, presence or absence of the observed product on the lifter 51 is detected by the product sensor 55, and results of the detection are input to the controller 10. Then, if the observed product is left on the lifter 51 ("Yes" in a step S23), a warning dialog box which warns the user of the presence of the observed product on the lifter 51 is displayed on the display 31 (step S24).

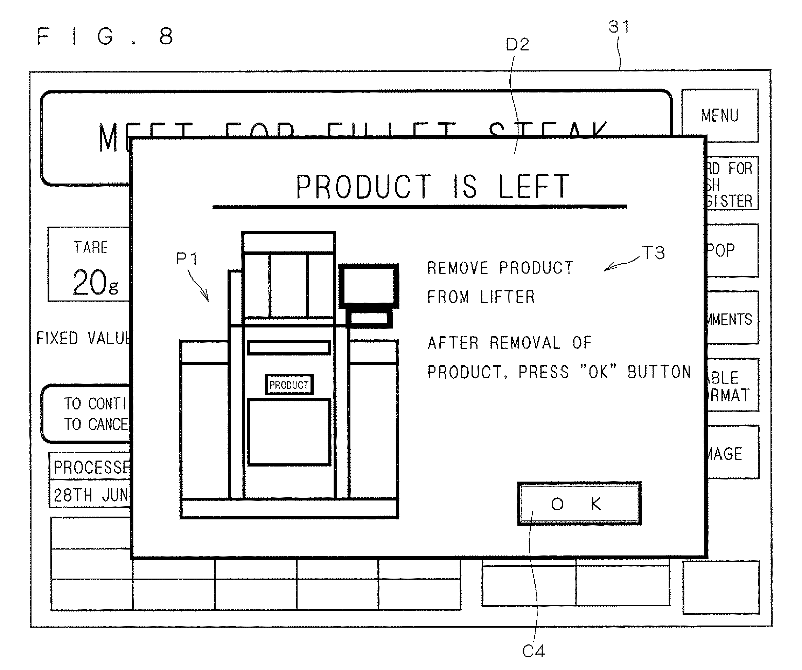

Fig. 8 illustrates an example of a warning dialog box D2. The warning dialog box D2 contains a warning message T3 which urges the user to remove the observed product from the lifter 51 and further contains illustration P1 of the weighing/packing/pricing apparatus 1. In the illustration P1, a position where the observed product is present is indicated. The warning dialog box D2 containing the foregoing displayed matters allows the user to easily remove the observed product from the lifter 51.

The warning dialog box D2 further contains an "OK" button C4. When the "OK" button C4 is pressed down, the warning dialog box D2 disappears from the screen of the display 31. Then, presence or absence of the observed product on the lifter 51 is again detected by the product sensor 55 (step S23). At that time, when the observed product is still left on the lifter 51, the warning dialog box D2 is displayed again (step S24). In this manner, the warning dialog box D2 repeatedly appears until the observed product is removed from the lifter 51. As a result, it is possible to surely remove the observed product which is to stand as an obstacle to the processes on the next product. After the observed product is removed form the lifter 51, the processes on the observed product are finished.

### <1-5. Conclusion>

As described above, in the weighing/packing/pricing apparatus 1, after a product is transferred to be placed on the lifter 51, a series of processes on the product are suspended until any instructions are received from a user. On the other hand, the display 31 includes the fixed-value display area A2 in addition to the real-time-value display area A1 which is legally required to be included. In the fixed-value display area A2, a fixed weight value of a product is displayed even after the product is unloaded from the weighing tray 41. Accordingly, a user can check a fixed weight value of a product based on a value displayed in the fixed-value display area A2, to determine whether or not the product should continue to be processed, before essential processes are carried out on the product.

In a case where a fixed weight value of a product does not satisfy desired conditions, a user can give instructions for cancellation, to thereby cancel processes on the product. When instructions for cancellation are received, a packing process and a label affixing process are cancelled, to thereby prevent a film or a label from being wasted. Also, as a product, processes on which are cancelled, is not subjected to a packing process using a film or a label affixing process, the product can be easily treated later.

Further, a fixed weight value of a product starts to be displayed before the product reaches the lifter 51 as a waiting position where the product is placed while processes on the product are suspended. After the product reaches the lifter 51, a user's instructions are waited. As such, a waiting time for a user's instructions is a useless time in a series of processes on the product. In this regard, as a fixed weight value of a product is surely displayed when the product reaches the lifter 51 in the weighing/packing/pricing apparatus 1, it is possible to determine whether or not the product should continue to be processed at a point in time when the product reaches the lifter 51. Hence, the waiting time can be minimized. It is additionally noted that though a fixed weight value of a product is displayed at the same time as the product starts to be transferred in the above description, a fixed weight value may be displayed by the time when the product reaches the lifter 51, at latest.

Moreover, when instructions for cancellation are received, the confirmation dialog box D1 containing a message explaining operations which must be performed by a user in order to carry out processes on a next product is displayed. This allows a user to smoothly process a next product also when the user gives instructions for cancellation. Also, if a product is left on the lifter 51 to stand as an obstacle to processes on a next product , the warning dialog box D2 containing a corresponding warning message is displayed. This makes it possible to prevent beforehand occurrence of an obstacle to processes on a next product.

### <2. Second Preferred Embodiment>

Next, a second preferred embodiment will be described. According to the first preferred embodiment, all operations included in each of a packing process and a label affixing process which are carried out by the packing part 5 and the label affixing part 6, respectively, are deferred until a user's instructions for either continuation or cancellation are received. In contrast thereto, according to the second preferred embodiment, stretching of a film in a packing process and label printing in a label affixing process are not deferred, but are carried out ahead of a user's instructions, in order to shorten a process cycle for continuously processing a plurality of products. A structure and operations of the weighing/packing/pricing apparatus 1 according to the second preferred embodiment are substantially identical to those according to the first preferred embodiment, and thus, differences from the first preferred embodiment will be chiefly discussed in the following description.

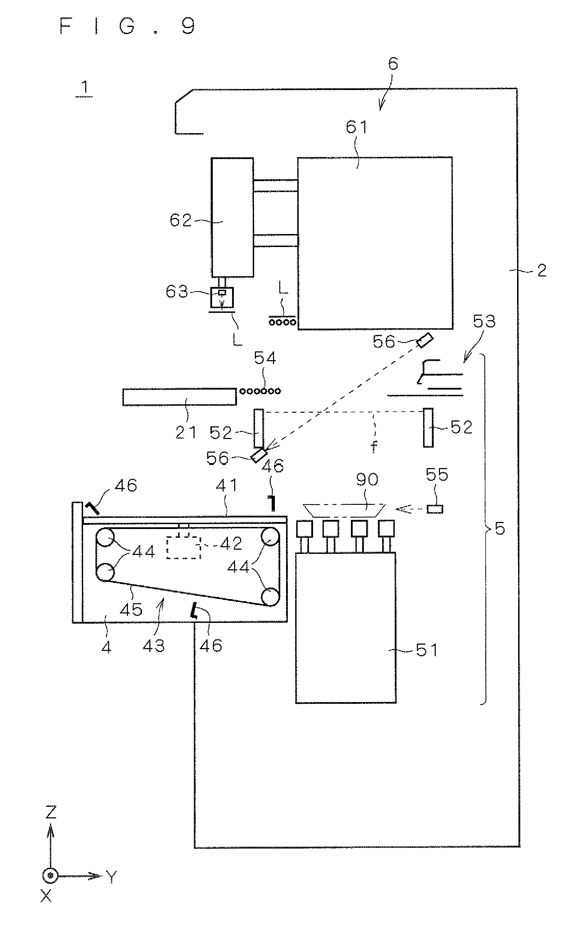

Fig. 9 is a diagrammatic diagram illustrating respective structures of components of the main body 2 of the weighing/packing/pricing apparatus 1 according to the second preferred embodiment. The weighing/packing/pricing apparatus 1 according to the second preferred embodiment includes a film sensor 56 and a label sensor 63 which are provided in the packing part 5 and the label affixing part 6, respectively, in addition to the components illustrated in Fig. 2. Each of the film sensor 56 and the label sensor 63 is electrically connected to the controller 10, and respective detecting results supplied from the film sensor 56 and the label sensor 63 are input to the controller 10.

The film sensor 56 functions to detect presence or absence of the film f in the stretch mechanism 52. The film sensor 56 includes a light projector and a light receiver which are placed on opposite sides of a position where the film f is supposed to be stretched out. Light is cast from the light projector to the light receiver, and presence or absence of the film f is detected depending on whether or not the light is interrupted.

The label sensor 63 functions to detect whether or not the label L is held at an end portion of the affixing arm 62. The label sensor 63, similarly to the product sensor 55, includes a reflection-type light sensor. The label sensor 63 is placed to face a position whether the label L is supposed to be held.

A flow of operations of the weighing/packing/pricing apparatus 1 according to the second preferred embodiment is substantially identical to that illustrated in Fig. 5. Differences lie in that a film is stretched out by the stretch mechanism 52 and label printing using a fixed weight value is started in the label affixing part 6 in response to establishment of the fixed weight value in the step S13. Accordingly, even while processes on an observed product are being suspended in the step S16, stretching of a film and label printing for the observed product are carried out. In label printing, after some information is printed on a label, the printed label is received by the affixing arm 62. Thus, while on the one hand, processes which are carried out directly on a product are deferred until a user's instructions are received, processes which are not carried out directly on a product are carried out without waiting for a user's instructions.

In the step S16, when continuation instructions are received, processes on the observed product which have been deferred are carried out in the same manner as in the first preferred embodiment. However, as stretching of a film and label printing have already been carried out, processes which should be carried out subsequently to the user's instructions can be accomplished earlier as compared to the first preferred embodiment.

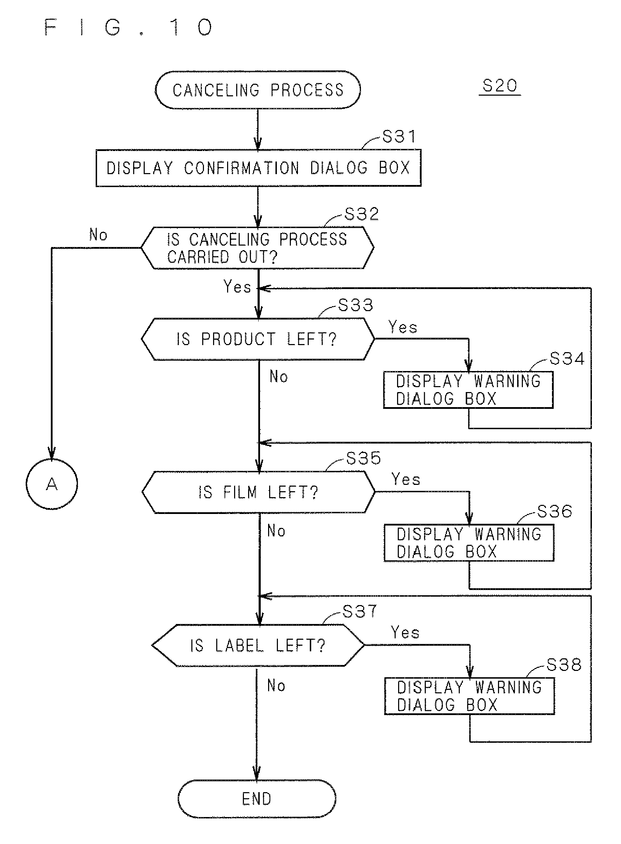

On the other hand, in the step S16, when cancellation instructions are received, the canceling process illustrated in Fig. 10 is carried out (step S20). Similarly to the first preferred embodiment, a confirmation dialog box showing the user cautions in canceling the processes on the observed product is displayed on the display 31 (step S31).

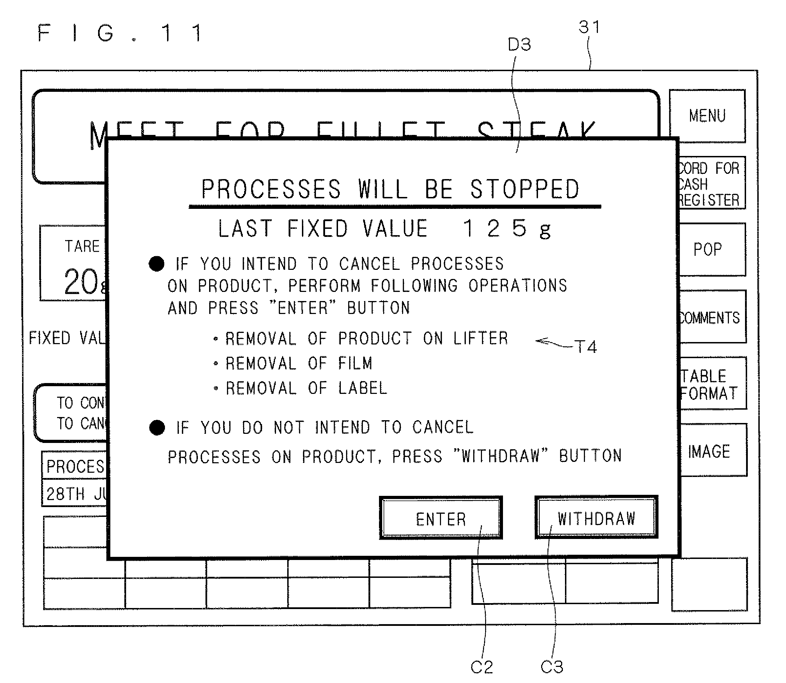

Fig. 11 illustrates an example of a confirmation dialog box D3 according to the second preferred embodiment. According to the second preferred embodiment, a film has been stretched out and some information has been printed on a label, and thus, the stretched film and the printed label, as well as the observed product on the lifter 51, can stand obstacles to processes on a next product. For this reason, explanatory information T4 contained in the confirmation dialog box D3 according to the second preferred embodiment teaches the user to remove beforehand all the foregoing obstacles.

Also, the "ENTER" button C2 and the "WITHDRAW" button C3 contained in the confirmation dialog box D3 function in the same manner as in the first preferred embodiment. Thus, when the "WITHDRAW" button C3 is pressed down, cancellation instructions are withdrawn ("No" in a step S32 in Fig. 10) and the processes returns to the step S16 in Fig. 5.

On the other hand, when the "ENTER" button C2 is pressed down, cancellation instructions are established ("Yes'' in the step S32). Subsequently, a check as to whether or not the observed product is properly removed from the lifter 51 is made in the same manner as in the first preferred embodiment. Then, the warning dialog box repeatedly appears until the observed product is removed from the lifter 51 (steps S33 and S34).

In the second preferred embodiment, additional checks as to whether or not a stretched film and a printed label are properly removed are made. More specifically, first, presence or absence of a film in the stretch mechanism 52 is detected by the film sensor 56, and corresponding detecting results are input to the controller 10. If any film is left ("Yes" in a step S35), a warning dialog box containing a message which warns the user of the presence of the film is displayed on the display 31 (step S36). Also this warning dialog box repeatedly appears until the film is removed.

After removal of the film is confirmed, presence or absence of a label at the end portion of the affixing arm 62 is detected by the label sensor 63, and corresponding detecting results are input to the controller 10. If any label is left ("Yes" in a step S37), a warning dialog box containing a message which warns the user of the presence of the label is displayed on the display 31 (step S38). Also this warning dialog box repeatedly appears until the label is removed. As a result of the above-described operations, all the obstacles to the processes on the next product can be surely removed.

As described above, according to the second preferred embodiment, stretching of a film in a packing process of the packing part 5 and label printing of a label affixing process of the label affixing part 6, which are not carried out directly on a product, are not deferred, but carried out ahead of a user's instructions. Therefore, a time required for processing one product can be considerably shortened.

### <3. Other Preferred Embodiments>

Below, other preferred embodiments will be described.

In the foregoing preferred embodiments, the weighing/packing/pricing apparatus including the affixing arm 62 which automatically affixes a label to a product has been described. However, the same techniques as described in the foregoing preferred embodiments can be applied also to a weighing label-printer which is capable of only printing some information based on a weight value on a label and issuing a printed label, and requires a user to manually affix the issued label to a product.

Also, though detection of an obstacle to processes on a next product is carried out as a part of the canceling process in the foregoing preferred embodiments, such detection of an obstacle may alternatively be carried out at a point in time when a next product starts to be processed.

Further, though processes on a product are suspended after the product is transferred to the lifter 51 in the foregoing preferred embodiments, transfer of the product from the weighing tray 41 may be deferred by the transfer mechanism 43 when a weight value of the product is fixed.

Moreover, the fixed-value display area A2 may alternatively be of a type that displays a fixed weight value responsive to a predetermined user operation, for example, so long as continuous display of the fixed weight value can be ensured after the fixed weight value of a product is obtained. Also, though a value displayed in the fixed-value display area A2 is kept un-changed until a next fixed weight value is obtained in the foregoing preferred embodiments, the value displayed in the fixed-value display area A2 may be erased after a user's instructions for either continuation or cancellation are received, so long as the displayed value is maintained in the fixed-value display area A2 until a user's instructions are received.

Furthermore, a value displayed in the real-time-value display area A1 is not necessarily required to indicate a weight value in real time in the strict sense. It is sufficient that a value displayed in the real-time-value display area A1 reflects a temporal change in weight value output from the weighing sensor 42 in almost real time. In other words, a time lag of several seconds between an actual change in weight value and display of the change is allowed.

## Claims

1. A weighing label-printer for generating a label on which an item reflecting a weight of an object is printed,
**CHARACTERIZED IN THAT**
said weighing label-printer comprises:
weighing means (42) for weighing an object (90) placed in a predetermined weighing position (41);
display means (31) comprising
first means (A1) for serially displaying temporary weight values of said object (90) which are obtained in said weighing means (42), and
second means (A2) for displaying a fixed weight value determined based on said temporary weight values;
unloading means (43) for unloading said object (90) from said weighing position (41);
input means (32, C1) for receiving a user's instructions which are either continuation instructions or cancellation instructions; and
processing means (5, 6) for carrying out a subsequent process on said object (90), wherein
said display means (31) is operable to continuously display said fixed weight value until said user's instructions are received, and
at least part of said subsequent process is not started before said user's instructions are received, and is enabled in response to said continuation instructions, but is not enabled in response to said cancellation instructions.

2. The weighing label-printer according to claim 1, wherein
said processing means (5, 6) comprises
label printing means (61) for printing an item determined in accordance with said fixed weight value on said label (L).

3. The weighing label-printer according to claim 1 or 2, wherein
said processing means (5, 6) comprises
affixing means (62) for affixing said label (L) to said object (90).

4. The weighing label-printer according to any of claims 1 through 3, wherein said processing means (5, 6) comprises
packing means (5) for packing said object (90) with a packing material (f).

5. The weighing label-printer according to claim 4, wherein
said packing means comprises
a lifter (51) for lifting up said object (90) in a packing process carried out on said object (90),
said packing process is deferred with said object (90) being placed on said lifter (51) until said user's instructions are received, and
said display means (31) is adapted to start to display said fixed weight value before said object (90) reaches said lifter (51).

6. The weighing label-printer according to claim 1, wherein
a waiting position (51) is located on a downstream side of said weighing position, and
said display means (31) is adapted to start to display said fixed weight value before said object (90) reaches said waiting position (51).

7. The weighing label-printer according to any of claims 1 through 6, wherein
said display means (31) is operable to display a guidance when said cancellation instructions are received, said guidance including a message (T2) explaining a user operation for processing a next object.

8. The weighing label-printer according to claim 7, wherein
said guidance further includes a confirmation message of said cancellation instructions.

9. The weighing label-printer according to claim 8, wherein
said input means (32, C1) is operable to display said fixed weight value again to wait for a new user's instructions when said cancellation instructions are withdrawn in response to said confirmation message.

10. The weighing label-printer according to any of claims 1 through 9, further comprising:
detecting means (55, 56, 63) enabled in response to said cancellation instructions, to detect an obstacle to a process on a next object; and
warning means (D2) for outputting warning (T3) when said obstacle is detected.

11. A method of generating a label on which an item reflecting a weight of an object is printed,
**CHARACTERIZED IN THAT**
said method comprises the steps of:
weighing an object (90) placed in a predetermined weighing position (41); serially displaying temporary weight values of said object (90);
displaying a fixed weight value determined based on said temporary weight values;
unloading said object (90) from said weighing position (41);
waiting for receipt of a user's instructions which are either continuation instructions or cancellation instructions, while continuously displaying said fixed weight value without starting at least part of a subsequent process on said object (90) until said user's instructions are received; and
starting said at least part of said subsequent process in response to said continuation instructions, wherein
said at least part of said subsequent process is not enabled when said cancellation instructions are received.
